(19) Europäisches Patentamt
European Patent Office
Office européen des brevets

(11) **EP 4 596 092 A1**

(12) **EUROPEAN PATENT APPLICATION**
published in accordance with Art. 153(4) EPC

(43) Date of publication:
**06.08.2025 Bulletin 2025/32**

(21) Application number: **23871812.6**

(22) Date of filing: **07.09.2023**

(51) International Patent Classification (IPC):
**B01D 61/36** (2006.01)    **B01D 65/10** (2006.01)
**B01D 71/02** (2006.01)    **B01D 71/70** (2006.01)

(52) Cooperative Patent Classification (CPC):
**B01D 61/36; B01D 65/10; B01D 71/02; B01D 71/70**

(86) International application number:
**PCT/JP2023/032766**

(87) International publication number:
**WO 2024/070575 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:    26.09.2022    JP 2022153132
08.03.2023    JP 2023035973

(71) Applicant: **NITTO DENKO CORPORATION**
**Ibaraki-shi**
**Osaka 567-8680 (JP)**

(72) Inventors:
• **YANO Hikaru**
**Ibaraki-shi, Osaka 567-8680 (JP)**
• **NAKANO Takeshi**
**Ibaraki-shi, Osaka 567-8680 (JP)**
• **OGAWA Tomoya**
**Ibaraki-shi, Osaka 567-8680 (JP)**
• **MURAKAMI Shinpei**
**Ibaraki-shi, Osaka 567-8680 (JP)**
• **IKENAGA Akie**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **AIR-PERMEABLE MEMBRANE**

(57)    The present invention provides a new pervaporation membrane suitable for separating a volatile organic compound from an aqueous solution containing the organic compound. A pervaporation membrane 10 of the present invention includes a separation functional layer 1. The separation functional layer 1 includes: a matrix 2 including a silicone resin; and a filler 3 dispersed in the matrix 2 and including silica. The pervaporation membrane 10 is configured to be used, for example, to separate a volatile organic compound from an aqueous solution containing the organic compound.

FIG.1

**Description**

TECHNICAL FIELD

The present invention relates to a pervaporation membrane.

BACKGROUND ART

A method using fermentation by a microorganism has been known as a method for obtaining a non-petroleum valuable substance. For example, there have been developed methods for producing a volatile organic compound (a fermented product), such as an alcohol, by fermenting a carbon source, such as glucose, by using a microorganism. The fermentation of a carbon source is carried out, for example, in an aqueous solution. In this method, the fermentation by a microorganism stops in some cases when the content of the fermented product in the aqueous solution increases. For continuous production of the fermented product by a microorganism, the fermented product needs to be separated from the aqueous solution.

One example of the method for separating a volatile organic compound from an aqueous solution containing the organic compound is a pervaporation method using a pervaporation membrane. The pervaporation method is suitable for separating a volatile organic compound from an aqueous solution containing various substances. Moreover, the pervaporation method tends to be able to reduce energy consumption and carbon dioxide emissions compared to a distillation method. The material of the pervaporation membrane used in the pervaporation method is specifically, for example, a silicone resin (e.g., Patent Literature 1).

CITATION LIST

Patent Literature

Patent Literature 1: JP 4899122 B2

SUMMARY OF INVENTION

Technical Problem

A new pervaporation membrane suitable for separating a volatile organic compound from an aqueous solution containing the organic compound has been required.

Solution to Problem

The present invention provides a pervaporation membrane including a separation functional layer, wherein the separation functional layer includes: a matrix including a silicone resin; and a filler dispersed in the matrix and including silica.

Advantageous Effects of Invention

According to the present invention, a new pervaporation membrane suitable for separating a volatile organic compound from an aqueous solution containing the organic compound can be provided.

BRIEF DESCRIPTION OF DRAWINGS

FIG. 1 is a cross-sectional view schematically showing a pervaporation membrane according to one embodiment of the present invention.
FIG. 2 is a schematic cross-sectional view showing a membrane separation device including a pervaporation membrane.
FIG. 3 is a perspective view schematically showing a modification of the membrane separation device.
FIG. 4 is a schematic configuration diagram showing an example of a membrane separation system.

DESCRIPTION OF EMBODIMENTS

A pervaporation membrane according to a first aspect of the present invention is a pervaporation membrane including a separation functional layer, wherein

the separation functional layer includes: a matrix including a silicone resin; and a filler dispersed in the matrix and including silica.

According to a second aspect of the present invention, for example, in the pervaporation membrane according to the first aspect, a Hansen solubility parameter of the filler is 20 MPa$^{1/2}$ to 27 MPa$^{1/2}$.

According to a third aspect of the present invention, for example, in the pervaporation membrane according to the first or second aspect, the filler has a surface modified with a modifying group including a hydrocarbon group.

According to a fourth aspect of the present invention, for example, in the pervaporation membrane according to the third aspect, the modifying group includes at least one selected from the group consisting of an organosilyl group and a polyorganosiloxane group.

According to a fifth aspect of the present invention, for example, in the pervaporation membrane according to any one of the first to fourth aspects,

pH measured by a test below for a dispersion of the filler is 4.0 to 9.0.

Test: Water, methanol, and the filler are mixed to prepare a dispersion, and pH of the dispersion is measured. A content of the filler in the dispersion is 4 wt%, a weight ratio between water and methanol in the dispersion is 1:1, and the dispersion has a temperature of 25°C.

According to a sixth aspect of the present invention, for example, in the pervaporation membrane according to any one of the first to fifth aspects, an average particle diameter of the filler is 1 μm or less.

According to a seventh aspect of the present invention, for example, in the pervaporation membrane according to any one of the first to sixth aspects, a content of the filler in the separation functional layer is less than 70 wt%.

According to an eighth aspect of the present invention, for example, in the pervaporation membrane according to any one of the first to seventh aspects, the silicone resin is formed from an addition type silicone resin composition, a condensation type silicone resin composition, or an UV-curable silicone resin composition.

According to a ninth aspect of the present invention, for example, the pervaporation membrane according to any one of the first to eighth aspects is configured to be used to separate a volatile organic compound from an aqueous solution containing the organic compound.

According to a tenth aspect of the present invention, for example, in the pervaporation membrane according to the ninth aspect, the organic compound is a fermented product generated by a microorganism.

The present invention will be described below in detail. The following description is not intended to limit the present invention to a specific embodiment.

<Embodiment of pervaporation membrane>

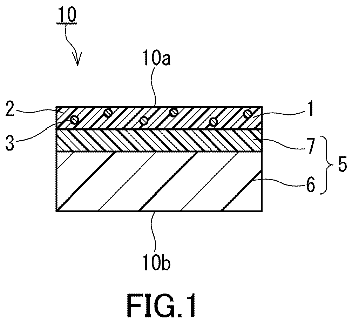

As shown in FIG. 1, a pervaporation membrane 10 of the present embodiment includes a separation functional layer 1. The pervaporation membrane 10 is typically a membrane (separation membrane) preferentially permeable to a volatile organic compound C in an aqueous solution S. The pervaporation membrane 10 may further include a porous support 5 supporting the separation functional layer 1. The separation functional layer 1 has, for example, a surface in direct contact with the porous support 5 and a surface exposed to the outside of the pervaporation membrane 10. The pervaporation membrane 10 is composed, for example, only of the separation functional layer 1 and the porous support 5.

(Separation functional layer)

The separation functional layer 1 is a layer, for example, preferentially permeable to the organic compound C in the above aqueous solution S, and is typically a dense layer (non-porous layer) in which no pores can be confirmed with a scanning electron microscope (SEM) at 5000-fold magnification.

The separation functional layer 1 includes: a matrix 2 including a silicone resin; and a filler 3 dispersed in the matrix 2 and including silica. All or a portion of particles of the filler 3 is embedded in the matrix 2. In the matrix 2, all particles of the filler 3 may be spaced from each other, or a portion of the particles of the filler 3 may aggregate.

As described above, the matrix 2 includes a silicone resin. The silicone resin is formed, for example, from a silicone resin composition. The silicone resin is formed from an addition type silicone resin composition, a condensation type silicone resin composition, or an UV-curable silicone resin composition, and is preferably formed from an addition type silicone resin composition. The addition type silicone resin composition can be cured with little metal species (particularly tin) that can promote hydrolysis of the silicone resin. Therefore, the separation functional layer 1 including the silicone resin formed from the addition type silicone resin composition includes little metal species that can promote hydrolysis of the silicone resin, and tends to have high durability against the aqueous solution S.

[Addition type silicone resin composition]

The addition type silicone resin composition is a silicone resin composition curable by an addition reaction. The addition type silicone resin composition includes, for example, a polyorganosiloxane P1 having an alkenyl group and a polyorganosiloxane P2 having a hydrosilyl (SiH) group. The addition type silicone resin composition preferably further includes a curing catalyst (hydrosilylation catalyst). The addition type silicone resin composition may be one produced by adding a curing catalyst to a commercially-available silicone resin composition. The addition type silicone resin composition may be free of a curing catalyst.

The silicone resin can be formed, for example, by subjecting the addition type silicone resin composition to a heating treatment by which a reaction (hydrosilylation reaction) between the alkenyl group in the polyorganosiloxane P1 and the hydrosilyl group in the polyorganosiloxane P2 proceeds. In this hydrosilylation reaction, the polyorganosiloxane P2 functions as a crosslinking agent.

The alkenyl group of the polyorganosiloxane P1 is, for example, a vinyl group or a hexenyl group. The number of alkenyl groups in the polyorganosiloxane P1 is, for example, two or more. The alkenyl group is located, for example, at a terminal of the polyorganosiloxane P1.

The polyorganosiloxane P1 is, for example, one formed by introducing an alkenyl group to a polyorganosiloxane, which is, for example, a polyalkylalkylsiloxane, such as polydimethylsiloxane, polydiethylsiloxane, or polymethylethylsiloxane; a polyalkylarylsiloxane; or poly(dimethylsiloxane-diethylsiloxane).

A weight-average molecular weight of the polyorganosiloxane P1 is, for example, 1,000 or more, and may be 10,000 or more, 100,000 or more, 200,000 or more, 300,000 or more, or even 400,000 or more. The larger the weight-average molecular weight of the polyorganosiloxane P1 is, the better separation properties the pervaporation membrane 10 is likely to have. The upper limit of the weight-average molecular weight of the polyorganosiloxane P1 is, for example, but not particularly limited to, 1,000,000.

The number of hydrosilyl groups in the polyorganosiloxane P2 is, for example, two or more. The hydrosilyl group may be located at a terminal of the polyorganosiloxane P2, or may be included in a main chain of the polyorganosiloxane P2.

Examples of the polyorganosiloxane P2 include polymethyl hydrogen siloxane, poly(dimethylsiloxane-methyl hydrogen siloxane), and hydrosilyl-terminated polydimethylsiloxane.

A weight-average molecular weight of the polyorganosiloxane P2 is, for example, 100 or more, and may be 10,000 or more. The larger the weight-average molecular weight of the polyorganosiloxane P2 is, the better separation properties the pervaporation membrane 10 is likely to have. The upper limit of the weight-average molecular weight of the polyorganosiloxane P2 is, for example, but not particularly limited to, 1,000,000.

A weight ratio P2/P1 of the polyorganosiloxane P2 to the polyorganosiloxane P1 is, for example, 500 wt% or less, and may be 100 wt% or less, 50 wt% or less, 20 wt% or less, 10 wt% or less, or even 5 wt% or less. The lower limit of the weight ratio P2/P1 is, for example, 0.01 wt% or more.

The curing catalyst is, for example, a platinum-based catalyst. In other words, the addition type silicone resin composition may include a curing catalyst including platinum. Specific examples of the platinum-based catalyst include chloroplatinic acid, an olefin complex of platinum, and an olefin complex of chloroplatinic acid. As described above, the addition type silicone resin composition may be free of a curing catalyst.

The addition type silicone resin composition may include a compound from which a catalytically active species that catalyzes an addition reaction is produced by irradiation with an active energy ray, such as ultraviolet (UV). An addition reaction can proceed, for example, by UV irradiation of the addition type silicone resin composition including such a compound.

The addition type silicone resin composition may further include an organic solvent in addition to the above components. Examples of the organic solvent include: hydrocarbon solvents, such as cyclohexane, n-hexane, and n-heptane; aromatic solvents, such as toluene and xylene; ester solvents, such as ethyl acetate and methyl acetate; ketone solvents, such as acetone and methyl ethyl ketone; and alcohol solvents, such as methanol, ethanol, and butanol. One of these organic solvents may be used alone, or two or more of these organic solvents may be used in combination. The addition type silicone resin composition may be of a solvent-free type which is substantially free of a solvent, such as an organic solvent.

[Condensation type silicone resin composition]

The condensation type silicone resin composition is a silicone resin composition curable by a condensation reaction. The condensation type silicone resin composition includes, for example, a polyorganosiloxane P3 having a silanol (SiOH) group and a silane compound P4 having a functional group, such as an alkoxy group, an alkenyloxy group, an acyloxy group, an amino group, a ketoxime group, or an amide group. The condensation type silicone resin composition may further include a curing catalyst, or may be free of a curing catalyst. The condensation type silicone resin composition may be one produced by adding a curing catalyst to a commercially-available silicone resin composition.

The silicone resin can be formed, for example, by subjecting the condensation type silicone resin composition to a heating treatment by which a reaction (condensation reaction) between the silanol group in the polyorganosiloxane P3 and the above functional group in the silane compound P4 proceeds. In this condensation reaction, the silane compound P4 functions as a crosslinking agent.

The number of silanol groups in the polyorganosiloxane P3 is, for example, two or more. The silanol group is located, for example, at a terminal of the polyorganosiloxane P3. An alkyl group, such as a methyl group or an ethyl group, a phenyl group, or the like may be introduced as a substituent of a side chain to the polyorganosiloxane P3.

The polyorganosiloxane P3 is, for example, one formed by introducing a silanol group to any of the polyorganosiloxanes described for the polyorganosiloxane P1.

A weight-average molecular weight of the polyorganosiloxane P3 is, for example, 1,000 or more, and may be 10,000 or more, 100,000 or more, 200,000 or more, 300,000 or more, or even 400,000 or more. The upper limit of the weight-average molecular weight of the polyorganosiloxane P3 is, for example, but not particularly limited to, 1,000,000.

As described above, the silane compound P4 has a functional group, such as an alkoxy group, an alkenyloxy group, an acyloxy group, an amino group, a ketoxime group, or an amide group. Examples of the alkoxy group include a methoxy group and an ethoxy group. Examples of the alkenyloxy group include an isopropenyloxy group. Examples of the acyloxy group include an acetoxy group. Examples of the amino group include a dimethylamino group, a diethylamino group, and an ethylmethylamino group. Examples of the ketoxime group include an acetoxime group and a methylethylketoxime group. Examples of the amide group include an acetamide group, an N-methylacetamide group, and an N-ethylacetamide group. The number of functional groups in the silane compound P4 is, for example, two or more. Specifically, the silane compound P4 preferably includes an alkoxysilyl group as the alkoxy group.

The silane compound P4 may be a low-molecular compound having a molecular weight of around 1000 or less, or may be a polymer compound having a polysiloxane framework.

The curing catalyst is, for example, a tin-based catalyst. Examples of the tin-based catalyst include organic tin catalysts, such as dibutyltin dilaurate, dibutyltin diacetate, and dibutyltin dioctate.

The condensation type silicone resin composition may further include an organic solvent in addition to the above components. Examples of the organic solvent include those described above for the addition type silicone resin composition. The condensation type silicone resin composition may be of a solvent-free type which is free of a solvent, such as an organic solvent.

[UV-curable silicone resin composition]

The UV-curable silicone resin composition is a silicone resin composition curable by ultraviolet (UV) irradiation. A curing reaction of the UV-curable silicone resin composition proceeds, for example, through radical polymerization, radical addition, ionic polymerization, or the like. The UV-curable silicone resin composition whose curing reaction proceeds through radical polymerization includes, for example, a polyorganosiloxane P5 including a double bond (specifically a carbon-carbon double bond) in an alkenyl group, an acryloyl group, or the like. The UV-curable silicone resin composition whose curing reaction proceeds through radical addition includes, for example, the polyorganosiloxane P5 including a double bond (specifically a carbon-carbon double bond) in an alkenyl group, an acryloyl group, or the like and a compound P6 having a functional group, such as a thiol group, capable of radical addition. The UV-curable silicone resin composition whose curing reaction proceeds through ionic polymerization includes, for example, a polyorganosiloxane P7 having a functional group, such as an epoxy group, capable of ionic polymerization and a compound from which a catalytically active species that catalyzes ionic polymerization is produced by UV irradiation.

By UV irradiation of the UV-curable silicone resin composition whose curing reaction proceeds through radical polymerization, for example, a radical polymerization reaction proceeds between the double bonds each included in the alkenyl group, the acryloyl group, or the like in the polyorganosiloxane P5, and thereby the silicone resin can be formed.

The alkenyl group of the polyorganosiloxane P5 is, for example, a vinyl group or a hexenyl group. The number of alkenyl groups in the polyorganosiloxane P5 is, for example, two or more. The alkenyl group is located, for example, at a terminal of the polyorganosiloxane P5. An alkyl group, such as a methyl group or an ethyl group, a phenyl group, or the like may be introduced as a substituent of a side chain to the polyorganosiloxane P5.

The polyorganosiloxane P5 is, for example, one formed by introducing a substituent, such as an alkenyl group or an acryloyl group, including a double bond to any of the polyorganosiloxanes described for the polyorganosiloxane P1.

A weight-average molecular weight of the polyorganosiloxane P5 is, for example, 1,000 or more, and may be 10,000 or more, 100,000 or more, 200,000 or more, 300,000 or more, or even 400,000 or more. The upper limit of the weight-average molecular weight of the polyorganosiloxane P5 is, for example, but not particularly limited to, 1,000,000.

By UV irradiation of the UV-curable silicone resin composition whose curing reaction proceeds through radical polymerization, for example, radical addition of the functional group capable of radical addition and included in the compound P6 to the double bond included in the alkenyl group, the acryloyl group, or the like in the polyorganosiloxane P5 occurs. Thereby a radical addition reaction proceeds, and the silicone resin can be formed.

Examples of the functional group capable of radical addition and included in the compound P6 include a thiol group and an alkylthiol group. Examples of the alkylthiol group include a mercaptomethyl group and a mercaptoethyl group. The number of functional groups capable of radical addition and included in the compound P6 is, for example, two or more.

The compound P6 may be a polyorganosiloxane including the functional group capable of radical addition. The above functional group is located, for example, at a terminal of the polyorganosiloxane. An alkyl group, such as a methyl group or an ethyl group, a phenyl group, or the like may be introduced as a substituent of a side chain to the polyorganosiloxane.

The compound P6 is, for example, one formed by introducing a functional group, such as a thiol group, capable of radical addition to any of the polyorganosiloxanes described for the polyorganosiloxane P1.

A weight-average molecular weight of the compound P6 is, for example, 1,000 or more, and may be 10,000 or more, 100,000 or more, 200,000 or more, 300,000 or more, or even 400,000 or more. The upper limit of the weight-average molecular weight of the compound P6 is, for example, but not particularly limited to, 1,000,000.

By UV irradiation of the UV-curable silicone resin composition whose curing reaction proceeds through ionic polymerization, for example, a catalytically active species that catalyzes ionic polymerization is produced, and an ionic polymerization reaction proceeds between the functional groups each capable of ionic polymerization and included in the polyorganosiloxane P7. The silicone resin can be formed thereby.

Examples of the functional group capable of ionic polymerization and included in the polyorganosiloxane P7 include an epoxy group. Examples of a substituent including an epoxy group include an epoxy group itself, a glycidyl group, and a glycidyloxypropyl group. The number of functional groups capable of ionic polymerization and included in the polyorganosiloxane P7 is, for example, two or more. The functional group capable of ionic polymerization is located, for example, at a terminal of the polyorganosiloxane P7. An alkyl group, such as a methyl group or an ethyl group, a phenyl group, or the like may be introduced as a substituent of a side chain to the polyorganosiloxane P7.

The polyorganosiloxane P7 is, for example, one formed by introducing a functional group, such as an epoxy group, capable of ionic polymerization to any of the polyorganosiloxanes described for the polyorganosiloxane P1.

A weight-average molecular weight of the polyorganosiloxane P7 is, for example, 1,000 or more, and may be 10,000 or more, 100,000 or more, 200,000 or more, 300,000 or more, or even 400,000 or more. The upper limit of the weight-average molecular weight of the polyorganosiloxane P7 is, for example, but not particularly limited to, 1,000,000.

The UV-curable silicone resin composition may further include an organic solvent in addition to the above components. Examples of the organic solvent include: hydrocarbon solvents, such as cyclohexane, n-hexane, and n-heptane; aromatic solvents, such as toluene and xylene; ester solvents, such as ethyl acetate and methyl acetate; ketone solvents, such as acetone and methyl ethyl ketone; and alcohol solvents, such as methanol, ethanol, and butanol. One of these organic solvents may be used alone, or two or more of these organic solvents may be used in combination. The UV-curable silicone resin composition may be of a solvent-free type which is substantially free of a solvent, such as an organic solvent.

The matrix 2 may include the silicone resin as its main component, or may be substantially composed only of the silicone resin. The term "main component" means a component having a largest content in the matrix 2 by weight.

A content of the matrix 2 in the separation functional layer 1 is, for example, but not particularly limited to 30 wt% to 99 wt%, and may be 30 wt% to 90 wt%.

As described above, the filler 3 includes silica. The filler 3 including silica tends to have higher resistance to hydrolysis than that of a filler including zeolite. Moreover, in the case of the filler 3 including silica, the silicone resin included in the matrix 2 tends to have a higher free volume. The higher free volume of the silicone resin tends to enhance the separation properties of the pervaporation membrane 10, particularly, a separation factor $\alpha$ for BuOH with respect to water. The free volume of the silicone resin is not limited to a particular value, and is, for example, 0.260 $nm^3$ or more, and may be 0.280 $nm^3$ or more, 0.300 $nm^3$ or more, 0.320 $nm^3$ or more, 0.330 $nm^3$ or more, or even 0.340 $nm^3$ or more. The upper limit of the free volume of the silicone resin is, for example, 0.400 $nm^3$ or less, and may be 0.380 $nm^3$ or less, or even 0.360 $nm^3$ or less. The free volume of the silicone resin may be 0.300 $nm^3$ to 0.400 $nm^3$. The free volume of the silicone resin can be determined by the following method.

Silica commonly means silicon dioxide. The filler 3 may be a silica filler including silicon dioxide as its main component. The silica filler does not have, for example, a crystal structure. The silica filler can be produced, for example, by causing silicon metal to react with oxygen. The silica filler can also be produced by a sol-gel process, sedimentation, an aqueous solution wet method, or the like. The filler 3 may be substantially composed only of silicon dioxide.

The filler 3, particularly the silica filler, is free of, for example, a micropore having a diameter of 2 nm or less. However, the filler 3 may have a mesopore having a diameter of 2 nm to 50 nm and a macropore having a diameter of 50 nm or more.

The filler 3 preferably has a surface modified with a modifying group including a hydrocarbon group. In other words, the filler 3 is preferably surface-treated with a modifying group. The surface-modified filler 3 is highly dispersible in the silicone resin and is suitable for inhibiting occurrence of a crack, for example, in production of the separation functional layer 1.

The number of carbon atoms in the hydrocarbon group included in the modifying group is, for example, but not particularly limited to, 1 to 25. The number of carbon atoms in the hydrocarbon group may be 5 or less. The hydrocarbon group may be linear, branched, or cyclic. Examples of the hydrocarbon group include alkyl groups, such as a methyl group and an ethyl group.

The modifying group may further include a silicon atom, and the hydrocarbon group may be bonded to the silicon atom. The modifying group may include at least one selected from the group consisting of an organosilyl group and a polyorganosiloxane group. Examples of the organosilyl group include: triorganosilyl groups, such as a trimethylsilyl group; and diorganosilyl groups, such as a dimethylsilyl group. Examples of the polyorganosiloxane group include a dimethylpolysiloxane group.

The surface modification with the modifying group can be performed, for example, by a reaction between a hydroxyl group at the surface of the filler 3 and a known silane coupling agent.

Specific examples of the surface-modified silica filler include those manufactured by Nippon Aerosil Co., Ltd. under the product names of "AEROSIL (registered trademark) RX series" (RX 50, RX 200, RX 300, etc.), "AEROSIL (registered trademark) RY series" (RY 50, RY 200, RY 200 S, etc.), "AEROSIL (registered trademark) NY series" (NY 50, NY 50 L, etc.), "AEROSIL (registered trademark) NAX series" (NAX 50, etc.), and "AEROSIL (registered trademark) R series" (R 972, R 974, R 976, etc.).

The filler 3 is preferably sufficiently surface-modified with the modifying group in terms of dispersibility in the silicone resin. In other words, the number of hydroxyl groups on the surface of the filler 3 is preferably small. Whether the filler 3 is sufficiently surface-modified with the modifying group can be judged, for example, from the pH of a dispersion of the filler 3 or a Hansen solubility parameter (HSP value) of the filler 3. Incidentally, the Hansen solubility parameter is a solubility parameter resulting from division of the solubility parameter introduced by Hildebrand into three components, namely, a dispersion term $\delta D$, a polarity term $\delta P$, and a hydrogen bonding term $\delta H$. The details of the Hansen solubility parameter are disclosed in, for example, "Hansen Solubility Parameters; A Users Handbook (CRC Press, 2007)".

In the present embodiment, the pH measured by Test 4 below for a dispersion of the filler 3 is, for example, 4.0 to 9.0, and may be 6.0 to 8.0. The pH of the dispersion is preferably neutral (around pH 7.0). When the pH of the dispersion is neutral, it can be said that the filler 3 is sufficiently surface-modified with the modifying group and the number of hydroxyl groups on the surface is small.

Test: Water, methanol, and the filler 3 are mixed to prepare a dispersion, and pH of the dispersion is measured. A content of the filler 3 in the dispersion is 4 wt%, a weight ratio between water and methanol in the dispersion is 1:1, and the dispersion has a temperature of 25°C.

The HSP value of the filler 3 is, for example, 30 MPa$^{1/2}$ or less, and may be 27 MPa$^{1/2}$ or less, 26 MPa$^{1/2}$ or less, 25 MPa$^{1/2}$ or less, or even 24 MPa$^{1/2}$ or less. The lower limit of the HSP value of the filler 3 is, for example, 20 MPa$^{1/2}$. The HSP value of the filler 3 may be 20 MPa$^{1/2}$ to 27 MPa$^{1/2}$, or 20 MPa$^{1/2}$ to 25 MPa$^{1/2}$. The HSP value of the filler 3 can be determined by the following method. First, 20 types of solvents having known HSP values are prepared. As the solvents can be used acetone, methanol, ethanol, butanol, acetonitrile, dimethyl sulfoxide, dipropylene glycol, $\gamma$-butyrolactone, N-methyl-2-pyrrolidone, tetrahydrofuran, aniline, acetic acid, benzyl alcohol, ethylene glycol, glycerin, 1-methylimidazole, N-methylformamide, pyridine, salicylaldehyde, and 2-aminoethanol.

Next, 0.01 g of the filler 3 was added to 20 mL of each of the prepared solvents, followed by a 10 minute ultrasonic treatment. Whether the filler 3 is dispersed in each solvent is visually judged. Specifically, if the solvent to which the filler 3 was added is transparent and no insoluble matter can be visually confirmed, it is judged that the filler 3 is dispersed in the solvent. Next, using software (e.g., Hansen Solubility Parameters in Practice (HSPiP)) for analysis of HSP value, each solvent where the filler 3 is dispersed is plotted on a three-dimensional graph whose axes represent dispersion term $\delta D$, polarity term $\delta P$, and hydrogen bonding term $\delta H$ to create a solubility sphere that encompasses the solvents. The values $\delta D$ (MPa$^{1/2}$), $\delta P$ (MPa$^{1/2}$), and $\delta H$ (MPa$^{1/2}$) of the center of the solubility sphere are substituted into the following equation, and the resulting calculation value $\delta T$ (MPa$^{1/2}$) can be considered the HSP value of the filler 3.

$$\delta T = (\delta D^2 + \delta P^2 + \delta H^2)^{1/2}$$

The filler 3 has, for example, a particle shape. The term "particle shape" herein includes a spherical shape, an elliptical shape, a flake shape, and a fiber shape. The filler 3 may be powdery. An average particle diameter of the filler 3 is, for example, but not particularly limited to, 50 $\mu$m or less, and may be 20 $\mu$m or less, 10 $\mu$m or less, 1 $\mu$m or less, 500 nm or less, 100 nm or less, 50 nm or less, 30 nm or less, or even 20 nm or less. The separation functional layer 1 including the filler 3 having a small average particle diameter is likely to distribute a stress applied to the separation functional layer 1 and tends to have strong adhesion to the porous support 5. The lower limit of the average particle diameter of the filler 3 of the separation functional layer 1 is, for example, but not particularly limited to, 1 nm, and may be 5 nm.

The average particle diameter of the filler 3 can be determined, for example, by the following method. First, a cross-section of the separation functional layer 1 is observed using a transmission electron microscope. The area of one of the particles of the filler 3 in the resulting electron microscope image is calculated by image processing. The diameter of a circle having the same area as the calculated area is considered the particle diameter (the diameter of the particle) of the particle of the filler 3. The particle diameter was calculated for any number (at least 50) of the particles of the filler 3, and the average of the calculated values was considered the average particle diameter of the filler 3.

The content of the filler 3 in the separation functional layer 1 is, for example, 1 wt% or more, and may be 5 wt% or more, 10 wt% or more, 20 wt% or more, 30 wt% or more, or even 40 wt% or more. The upper limit of the content of the filler 3 in the separation functional layer 1 is, for example, but not particularly limited to, less than 70 wt%, and may be less than 50 wt%. When the content of the filler 3 is less than 50 wt%, it is likely that occurrence of a defect, such as a crack, can be sufficiently inhibited in production of the separation functional layer 1. The separation functional layer 1 is, for example, substantially free of fillers (e.g., zeolite particles) other than the filler 3 including silica.

A surface area D1 of the filler 3 per weight of the matrix 2 is, for example, but not particularly limited to, 5 m²/g or more, and may be 10 m²/g or more, 20 m²/g or more, 30 m²/g or more, 40 m²/g or more, or even 50 m²/g or more. The upper limit of the surface area D1 is, for example, but not particularly limited to, 100 m²/g or less. The surface area D1 can be calculated by the following equation using a BET specific surface area D2 (m²/g) determined for the filler 3 by nitrogen gas adsorption, a weight W1 (g) of the matrix 2 included in the separation functional layer 1, and a weight W2 (g) of the filler 3 included in the separation functional layer 1.

$$D1 \ (m^2/g) = D2 \ (m^2/g) \times W2 \ (g)/W1 \ (g)$$

A thickness of the separation functional layer 1 is, for example, 200 μm or less, and may be 100 μm or less, or even 80 μm or less. The thickness of the separation functional layer 1 may be 1.0 μm or more, 10 μm or more, or even 30 μm or more.

(Porous support)

The porous support 5 includes, for example, a main portion 6 and a fine porous layer 7 placed on the main portion 6. In the pervaporation membrane 10, the fine porous layer 7 is positioned between the main portion 6 and the separation functional layer 1, and is in direct contact with both the main portion 6 and the separation functional layer 1. The porous support 5 is typically an ultrafiltration membrane.

The main portion 6 is, for example, a fibrous structure, such as a woven fabric or a non-woven fabric, and is typically a non-woven fabric. Examples of a fiber included in the fibrous structure include: natural fibers, such as wood pulp, cotton, and hemp (e.g., Manila hemp); and chemical fibers (synthetic fibers), such as polyester fiber, rayon, vinylon, acetate fiber, polyvinyl alcohol (PVA) fiber, polyamide fiber, polyolefin fiber, and polyurethane fiber. The main portion 6 is, for example, a non-woven fabric formed of polyester fiber. The main portion 6 has, for example, an average pore diameter of 1 μm to 50 μm.

Examples of the material of the fine porous layer 7 include fluorine resins, such as polyvinylidene fluoride and polytetrafluoroethylene; polyarylethersulfones, such as polysulfone and polyethersulfone; and polyimides. The fine porous layer 7 has, for example, an average pore diameter of 0.01 μm to 0.4 μm.

A thickness of the porous support 5 is, for example, but not particularly limited to, 10 μm or more, and may be 50 μm or more, or even 100 μm or more. The thickness of the porous support 5 is, for example, 300 μm or less, and may be 200 μm or less.

(Pervaporation membrane production method)

The pervaporation membrane 10 can be produced, for example, by forming the separation functional layer 1 on the fine porous layer 7 of the porous support 5. Specifically, first, a coating liquid containing materials of the separation functional layer 1 is prepared. The coating liquid is, for example, a mixture of the silicone resin composition (the addition type silicone resin composition, the condensation type silicone resin composition, or the UV-curable silicone resin composition) and the filler. Herein, the mixture including the silicone resin composition and the filler can also be simply referred to as "silicone resin composition". Then, the coating liquid was applied to the porous support 5 to form a coating film. The coating film is cured to form the separation functional layer 1. The curing of the coating film can be performed at ordinary temperature or in a heated environment. The curing of the coating film can also be performed by irradiation with an active energy ray, such as UV.

In the case of curing the coating film by heating, conditions for heating the coating film are not limited to particular conditions. For example, the temperature at which the coating film is heated may be 80°C or higher, 90°C or higher, 100°C or higher, or even 120°C or higher. The higher the heating temperature for the coating film is, the more sufficiently a curing reaction of the components in the silicone resin composition proceeds. The upper limit of the heating temperature of the coating film is, for example, but not particularly limited to, 200°C. The heating time for the coating film can be adjusted as appropriate according to the composition of the silicone resin composition used.

(Application of pervaporation membrane)

A suitable application of the pervaporation membrane 10 of the present embodiment is to separate the volatile organic compound C from the aqueous solution S containing the organic compound C. The organic compound C is not limited to a particularly one as long as the organic compound C has volatility. An organic compound having volatility herein refers to, for example, an organic compound having a boiling point of 20°C to 260°C under the atmospheric pressure (101.325 kPa). Note that the organic compound C is, for example, one that, at high concentration in the solution, causes formation of an aqueous phase containing water as its main component and an organic phase having a higher content of organic compound C than that in the aqueous phase. The organic compound C may be one that does not cause formation of an aqueous phase and an organic phase.

The number of carbon atoms in the organic compound C is, for example, but not particularly limited to, 10 or less, and may be 8 or less, 6 or less, or even 4 or less. The lower limit of the number of carbon atoms in the organic compound C may be 1 or 2. The organic compound C has, for example, an oxygen-containing functional group, such as a hydroxyl group, a carbonyl group, an ether group, and an ester group. In the organic compound C, the number of oxygen-containing functional groups is typically one.

Examples of the organic compound C include an alcohol, a ketone, and an ester. The organic compound C is typically an alcohol. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol include methanol, ethanol, n-propanol, isopropanol, n-butanol, 2-butanol, isobutanol, t-butanol, and n-pentanol. Examples of the aryl alcohol include phenol.

The ketone may be a dialkyl ketone composed only of an alkyl group and a carbonyl group. Examples of the dialkyl ketone include methyl ethyl ketone (MEK) and acetone.

The ester may be an aliphatic alkyl ester composed only of an alkyl group and an ester group. Examples of the aliphatic alkyl ester include ethyl acetate.

The organic compound C is not limited to those mentioned above. The organic compound C may be an aromatic hydrocarbon, such as benzene, toluene, or xylene.

The aqueous solution S may contain one organic compound C, or two or more organic compounds C. The content of the organic compound C in the aqueous solution S is, for example, 0.5 wt% or more, and may be 1 wt% or more, 2 wt% or more, or even 5 wt% or more. The upper limit of the content of the organic compound C is, for example, but not particularly limited to, 50 wt%.

The organic compound C may be a fermented product generated by fermentation of a carbon source by a microorganism, or may be an alcohol (bioalcohol) generated by a microorganism. That is, the aqueous solution S may be a fermented solution containing the organic compound C as the fermented product. The aqueous solution S is not limited to the fermented solution and may be a waste solution or waste water discharged from a chemical plant or the like.

The aqueous solution S may further contain an additional component, such as the microorganism by which the fermented product is generated, the carbon source, a nitrogen source, and an inorganic ion, other than water and the organic compound C. The microorganism by which the fermented product is generated is typically a bacterium. Examples of the carbon source include polysaccharides, such as starch, and monosaccharides, such as glucose.

(Properties of pervaporation membrane)

A separation factor of the pervaporation membrane 10 for the organic compound C with respect to water tends to be high. In one example, the separation factor $\alpha$ of the pervaporation membrane 10 for n-butanol (BuOH) with respect to water is, for example, 25 or more, and may be 30 or more, 35 or more, or even 40 or more. The upper limit of the separation factor $\alpha$ is, for example, 100.

The separation factor $\alpha$ can be measured by the following method. In a state where a liquid mixture consisting of BuOH and water is in contact with one surface (e.g., a principal surface 10a of the pervaporation membrane 10 on the separation functional layer side) of the pervaporation membrane 10, a space adjacent to the other surface (e.g., a principal surface 10b of the pervaporation membrane 10 on the porous support side) of the pervaporation membrane 10 is decompressed to 15 hPa. A permeated fluid having permeated through the pervaporation membrane 10 is thus obtained. A weight ratio of water and a weight ratio of BuOH in the permeated fluid are measured. In the above process, a content of BuOH in the liquid mixture is 1.0 wt%. The liquid mixture in contact with the pervaporation membrane 10 has a temperature of 30°C. The space adjacent to the other surface of the pervaporation membrane 10 is decompressed to 15 hPa. The

separation factor $\alpha$ can be calculated by the following equation. In the following equation, $X_A$ and $X_B$ are respectively a weight ratio of BuOH and that of water in the liquid mixture. The symbols $Y_A$ and $Y_B$ are respectively the weight ratio of BuOH and that of water in the permeated fluid having permeated through the pervaporation membrane 10.

$$\text{Separation factor } \alpha = (Y_A/Y_B)/(X_A/X_B)$$

Under the above measurement conditions for the separation factor $\alpha$, a flux of the BuOH having permeated through the pervaporation membrane 10 is, for example, but not particularly limited to, 0.01 (g/min/m$^2$) to 10.0 (g/min/m$^2$).

For the pervaporation membrane 10 of the present embodiment, the adhesion between the separation functional layer 1 and the porous support 5 tends to be high. For the pervaporation membrane 10, for example, a peeling strength A measured by a test below is 0.15 N/20 mm or more.

Test: The pervaporation membrane 10 is cut to 20 mm in width and 150 mm in length to give a test piece. The separation functional layer 1 of the test piece is peeled off the porous support 5 of the test piece at a peel angle of 180° and a tensile speed of 300 mm/min.

The test above is carried out specifically by the following method. First, the pervaporation membrane 10 to be evaluated is cut to 20 mm in width and 150 mm in length to give a test piece. Then, the entire surface of the porous support 5 of the test piece is stacked on an acrylic test plate with a double-faced tape (e.g., No.5000NS manufactured by Nitto Denko Corporation) therebetween, and a 2 kg roller is moved back and forth once to press-bond these. The acrylic test plate has, for example, dimensions of 150 mm in width and 150 mm in length. Then, in a direction from one end of the test piece toward the other end, the separation functional layer 1 is pulled by hand to be peeled off the porous support 5 by 90 mm only. A commercially-available tensile tester is used to grip the peeled portion of the separation functional layer 1 and a portion near the one end of the test piece with chucks, and the rest of the separation functional layer 1 is peeled off the porous support 5 at a peel angle of 180° and a tensile speed of 300 mm/min. The average of peel force during the peeling is determined as the peeling strength A. For the tensile tester, an initial chuck-to-chuck distance is 150 mm. The test is carried out in an atmosphere at 25°C.

The peeling strength A is preferably 0.2 N/20 mm or more, and may be 0.3 N/20 mm or more, 0.4 N/20 mm or more, 0.5 N/20 mm or more, or even 0.6 N/20 mm or more. The upper limit of the peeling strength A is, for example, but not particularly limited to, 20 N/20 mm.

<Embodiment of membrane separation device>

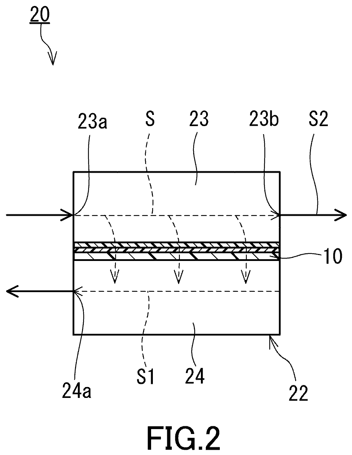

As shown in FIG. 2, a membrane separation device 20 of the present embodiment includes the pervaporation membrane 10 and a tank 22. The tank 22 has a first chamber 23 and a second chamber 24. The first chamber 23 functions as a feed space to which a supplied fluid (specifically, the aqueous solution S described above) is supplied. The second chamber 24 functions as a permeation space to which a permeated fluid S1 is supplied. The permeated fluid S1 is obtained by allowing the aqueous solution S to permeate through the pervaporation membrane 10.

The pervaporation membrane 10 is placed in the tank 22. In the tank 22, the pervaporation membrane 10 separates the first chamber 23 and the second chamber 24 from each other. The pervaporation membrane 10 extends from one of a pair of wall surfaces of the tank 22 to the other.

The first chamber 23 has an inlet 23a and an outlet 23b. The second chamber 24 has an outlet 24a. The inlet 23a is an opening for supplying the aqueous solution S to the feed space (the first chamber 23). The outlet 24a is an opening for discharging the permeated fluid S1 from the permeation space (the second chamber 24). The outlet 23b is an opening for discharging, from the feed space (the first chamber 23), the aqueous solution S (a non-permeated fluid S2) not having permeated through the pervaporation membrane 10. The inlet 23a, the outlet 23b, and the outlet 24a are arranged, for example, in the wall surfaces of the tank 22.

The membrane separation device 20 is suitable for a flow-type (continuous-type) membrane separation method. However, the membrane separation device 20 may be used for a batch-type membrane separation method.

(Method for operating membrane separation device)

Operation of the membrane separation device 20 is performed, for example, by the following method. First, the aqueous solution S is supplied to the first chamber 23 of the membrane separation device 20 through the inlet 23a. This makes it possible to bring the aqueous solution S into contact with one surface (e.g., the principal surface 10a) of the pervaporation membrane 10.

Next, in a state where the aqueous solution S is in contact with the one surface of the pervaporation membrane 10, a space adjacent to the other surface (e.g., the principal surface 10b) of the pervaporation membrane 10 is decompressed. Specifically, the second chamber 24 is decompressed via the outlet 24a. The second chamber 24 can be decompressed, for example, by a decompression device, such as a vacuum pump. A pressure in the second chamber 24 is, for example, 50 kPa or less, and may be 20 kPa or less, 10 kPa or less, 5 kPa or less, 3 kPa or less, or even 2 kPa or less. The term "pressure" herein means absolute pressure unless otherwise noted.

By decompressing the second chamber 24, the permeated fluid S1 having a high content of the organic compound C can be obtained on the other surface side of the pervaporation membrane 10. In other words, the permeated fluid S1 is supplied to the second chamber 24. In the second chamber 24, the permeated fluid S1 is typically a gas. The permeated fluid S1 is discharged outside the membrane separation device 20 through the outlet 24a.

On the other hand, the content of the organic compound C in the aqueous solution S gradually decreases from the inlet 23a of the first chamber 23 toward the outlet 23b thereof. The aqueous solution S (the non-permeated fluid S2) processed in the first chamber 23 is discharged outside the membrane separation device 20 through the outlet 23b. The non-permeated fluid S2 is typically a liquid.

As described above, the pervaporation membrane 10 can preferentially allow the organic compound C contained in the aqueous solution S to permeate therethrough. Therefore, the content of the organic compound C in the permeated fluid S1 obtained by the operation of the membrane separation device 20 is higher than that in the aqueous solution S to be supplied to the membrane separation device 20.

<Modification of membrane separation device>

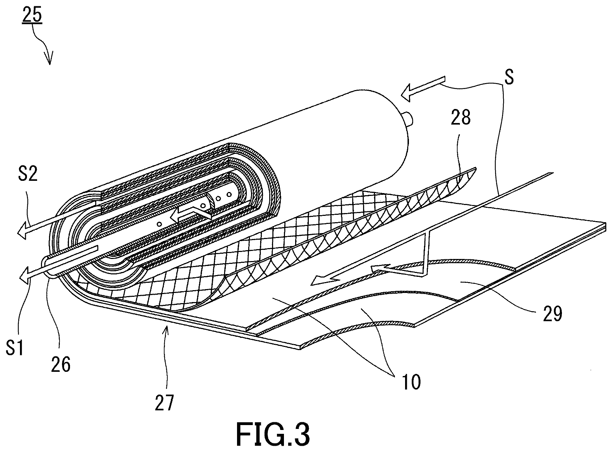

The membrane separation device 20 may be a spiral membrane element, a hollow fiber membrane element, a disk tube membrane element in which a plurality of pervaporation membranes are laminated, a plate-and-flame membrane element, or the like. FIG. 3 shows a spiral membrane element. A membrane separation device 25 of FIG. 3 includes a central tube 26 and a laminate 27. The laminate 27 includes the pervaporation membrane 10.

The central tube 26 has a cylindrical tube shape. The central tube 26 has a surface with a plurality of holes or slits to allow the permeated fluid S1 to flow into the central tube 26. Examples of a material of the central tube 26 include: resins, such as an acrylonitrile-butadiene-styrene copolymer resin (an ABS resin), a polyphenylene ether resin (a PPE resin), or a polysulfone resin (a PSF resin); and metals, such as stainless steel or titanium. The central tube 26 has an inner diameter in a range of, for example, 20 to 100 mm.

The laminate 27 further includes a feed-side flow passage material 28 and a permeation-side flow passage material 29 in addition to the pervaporation membrane 10. The laminate 27 is wound around the central tube 26. The membrane separation device 25 may be further provided with an exterior material (not shown).

As the feed-side flow passage material 28 and the permeation-side flow passage material 29 can be used, for example, a net, woven fabric, or knitted fabric formed of a resin, such as polyethylene, polypropylene, polyethylene terephthalate (PET), polyphenylene sulfide (PPS), or an ethylene-chlorotrifluoroethylene copolymer (ECTFE).

The membrane separation device 25 can be operated, for example, by the following method. First, the aqueous solution S is supplied to an end of the wound laminate 27. A space inside the central tube 26 is decompressed. The permeated fluid S1 having permeated through the pervaporation membrane 10 of the laminate 27 thereby moves into the central tube 26. The permeated fluid S1 is discharged outside through the central tube 26. The aqueous solution S (the non-permeated fluid S2) processed by the membrane separation device 25 is discharged outside from the other end of the wound laminate 27.

<Embodiment of membrane separation system>

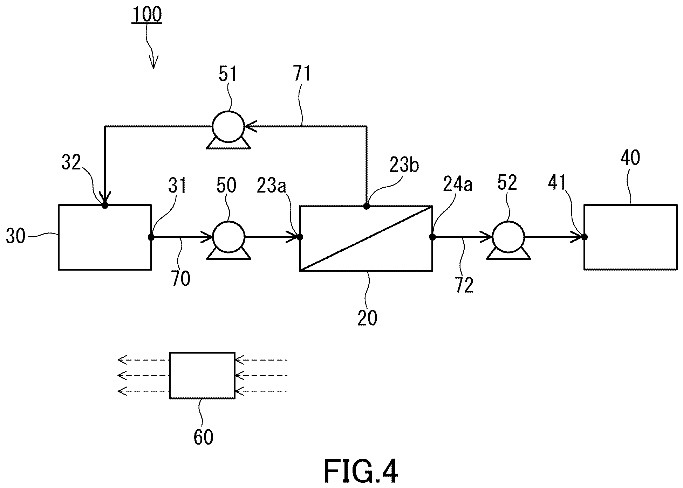

As shown in FIG. 4, a membrane separation system 100 of the present embodiment includes the membrane separation device 20 described above. The membrane separation system 100 may include the membrane separation device 25 described in FIG. 3 instead of the membrane separation device 20.

The membrane separation system 100 further includes a tank 30 in addition to the membrane separation device 20. The tank 30 stores the aqueous solution S to be supplied to the membrane separation device 20. The tank 30 may be a fermenter for generating the organic compound C by fermentation of a carbon source by a microorganism.

The membrane separation system 100 further includes an aqueous solution feed passage 70, a non-permeated fluid discharge passage 71, and a permeated fluid discharge passage 72. The aqueous solution feed passage 70 is a passage for supplying the aqueous solution S from the tank 30 to the membrane separation device 20 during operation, and is connected to an outlet 31 of the tank 30 and the inlet 23a of the membrane separation device 20. The aqueous solution feed passage 70 is provided, for example, with a pump 50 that controls a flow rate of the aqueous solution S.

The non-permeated fluid discharge passage 71 is a passage for discharging the non-permeated fluid S2 from the membrane separation device 20 during operation, and is connected to the outlet 23b of the membrane separation device 20. The non-permeated fluid discharge passage 71 is provided, for example, with a pump 51 that controls a flow rate of the non-permeated fluid S2. Note that the non-permeated fluid discharge passage 71 may not be provided with the pump 51. The non-permeated fluid discharge passage 71 may be connected to an inlet 32 of the tank 30 and configured to supply the non-permeated fluid S2 to the tank 30 during operation. That is, the non-permeated fluid discharge passage 71 may be configured to allow the non-permeated fluid S2 to be mixed with the aqueous solution S in the tank 30 and to circulate through the aqueous solution feed passage 70 and the non-permeated fluid discharge passage 71. In the case where the non-permeated fluid S2 is supplied to the tank 30, the aqueous solution S and the non-permeated fluid S2 are mixed in the tank 30 to decrease the content of the organic compound C in the aqueous solution S. In the case where the tank 30 is a fermenter, a decrease in the content of the organic compound C in the aqueous solution S can inhibit fermentation by a microorganism from stopping, thereby making it possible to produce the fermented product continuously.

The permeated fluid discharge passage 72 is a passage for discharging the permeated fluid S1 from the membrane separation device 20 during operation, and is connected to the outlet 24a of the membrane separation device 20. The permeated fluid discharge passage 72 is provided, for example, with a decompression device 52. The decompression device 52 can decompress the permeation space of the membrane separation device 20. The decompression device 52 is preferably a vacuum device, such as a vacuum pump. The vacuum pump is typically a gas transport vacuum pump, and is, for example, a reciprocating vacuum pump, a rotary vacuum pump, or the like. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps, such as a roots dry pump, a claw dry pump, a screw dry pump, a turbo dry pump, and a scroll dry pump. The pump as the decompression device 52 may include a variable speed mechanism for changing the rotational speed, etc. An example of the variable speed mechanism is an inverter that drives a motor of the pump. By controlling the rotational speed, etc. of the pump by the variable speed mechanism, it is possible to adjust properly the pressure in the permeation space of the membrane separation device 20.

The permeated fluid discharge passage 72 may be further provided with a heat exchanger for cooling the permeated fluid S1. The heat exchanger can condense the permeated fluid S1 that is gaseous. The heat exchanger is, for example, a gas-liquid heat exchanger that causes heat exchange between a cooling medium, such as an antifreeze, and the permeated fluid S1 that is gaseous. The heat exchanger may be positioned between the membrane separation device 20 and the decompression device 52 (upstream of the decompression device 52), or between the decompression device 52 and a recovery unit 40 (downstream of the decompression device 52) described later.

The membrane separation system 100 further includes a recovery unit 40. The recovery unit 40 recovers the permeated fluid S1 from the membrane separation device 20 and can, for example, store the permeated fluid S1. The recovery unit 40 is, for example, a tank that stores the permeated fluid S1. The permeated fluid discharge passage 72 is connected to an inlet 41 of the recovery unit 40.

The membrane separation system 100 may further include a controller 60 that controls each member of the membrane separation system 100. The controller 60 is, for example, a digital signal processor (DSP) including an A/D conversion circuit, an input/output circuit, an arithmetic circuit, a storage device, etc. A program for operating properly the membrane separation system 100 is stored in the controller 60.

Each passage of the membrane separation system 100 is formed of, for example, a metal or resin pipe unless otherwise noted.

EXAMPLES

Hereinafter, the present invention will be described in more detail by way of examples and a comparative example, but the present invention is not limited to these examples.

(Example 1)

First, 10.5 g of a silica filler (AEROSIL RX 50 manufactured by Nippon Aerosil Co., Ltd.), 77.1 g of toluene (manufactured by FUJIFILM Wako Pure Chemical Corporation; special grade) as a dilute solvent, and 0.65 g of a platinum-based catalyst (CAT-PL-50T manufactured by Shin-Etsu Chemical Co., Ltd.) as a curing catalyst were added to 65 g of a silicone resin composition (KS-847T manufactured by Shin-Etsu Chemical Co., Ltd.; toluene solution; solids: 30 wt%) to produce a coating liquid (addition type silicone resin composition). The silica filler had a surface modified with a trimethylsilyl (TMS) group. Then, the coating liquid was applied to a porous support to form a coating film (thickness: 500 μm). As the porous support was used RS-50 (a laminate composed of a fine porous PVDF layer and a non-woven PET fabric) manufactured by Nitto Denko Corporation. The coating film was formed on the fine porous PVDF layer of the RS-50.

Subsequently, the coating film was cured by heating at 90°C for 20 minutes to produce a separation functional layer having a thickness of 50 μm. The content of the filler in the separation functional layer was 35 wt%. A pervaporation membrane of Example 1 was obtained in this manner.

(Example 2)

A pervaporation membrane of Example 2 was obtained in the same manner as in Example 1, except that the type of filler was changed as shown in Table 2.

(Example 3)

A pervaporation membrane of Example 3 was obtained in the same manner as in Example 1, except that 15 g of a silica filler (AEROSIL RX 50 manufactured by Nippon Aerosil Co., Ltd.), 87 g of toluene (manufactured by FUJIFILM Wako Pure Chemical Corporation; special grade) as a dilute solvent, and 0.5 g of a platinum-based catalyst (CAT-PL-50T manufactured by Shin-Etsu Chemical Co., Ltd.) as a curing catalyst were added to 50 g of a silicone resin composition (KS-847T manufactured by Shin-Etsu Chemical Co., Ltd.; toluene solution; solids: 30 wt%) to produce a coating liquid (addition type silicone resin composition).

(Example 4)

A pervaporation membrane of Example 4 was obtained in the same manner as in Example 1, except that 10.5 g of a silica filler (AEROSIL RX 50 manufactured by Nippon Aerosil Co., Ltd.), 82.3 g of toluene (manufactured by FUJIFILM Wako Pure Chemical Corporation; special grade) as a dilute solvent, and 1.95 g of a tin-based catalyst (YC6831 manufactured by Momentive Performance Materials Japan LLC.) as a curing catalyst were added to 65 g of a silicone resin composition (YSR3022 manufactured by Momentive Performance Materials Japan LLC.) to produce a coating liquid (condensation type silicone resin composition).

(Example 5)

A pervaporation membrane of Example 5 was obtained in the same manner as in Example 4, except that the type of filler was changed as shown in Table 2.

(Example 6)

A pervaporation membrane of Example 6 was obtained in the same manner as in Example 1, except that 15 g of a silica filler (AEROSIL RX 50 manufactured by Nippon Aerosil Co., Ltd.), 91.0 g of toluene (manufactured by FUJIFILM Wako Pure Chemical Corporation; special grade) as a dilute solvent, and 1.5 g of a tin-based catalyst (YC6831 manufactured by Momentive Performance Materials Japan LLC.) as a curing catalyst were added to 50 g of a silicone resin composition (YSR3022 manufactured by Momentive Performance Materials Japan LLC.) to produce a coating liquid (condensation type silicone resin composition).

(Example 7)

A pervaporation membrane of Example 7 was obtained in the same manner as in Example 6, except that the type of filler was changed as shown in Table 2.

(Example 8)

A pervaporation membrane of Example 8 was obtained in the same manner as in Example 1, except that 54 g of toluene (manufactured by **FUJIFILM** Wako Pure Chemical Corporation; special grade) as a dilute solvent and 1 g of a platinum-based catalyst (CAT-PL-50T manufactured by Shin-Etsu Chemical Co., Ltd.) as a curing catalyst were added to 100 g of a silicone resin composition (KS-847T manufactured by Shin-Etsu Chemical Co., Ltd.; toluene solution; solids: 30 wt%) to produce a coating liquid (addition type silicone resin composition).

(Example 9)

A pervaporation membrane of Example 9 was obtained in the same manner as in Example 1, except that 3.75 g of a silica filler (AEROSIL RX 200 manufactured by Nippon Aerosil Co., Ltd.), 42.0 g of toluene (manufactured by FUJIFILM Wako Pure Chemical Corporation; special grade) as a dilute solvent, and 0.5 g of a platinum-based catalyst (CAT-PL-50T manufactured by Shin-Etsu Chemical Co., Ltd.) as a curing catalyst were added to 50 g of a silicone resin composition (KS-847T manufactured by Shin-Etsu Chemical Co., Ltd.; toluene solution; solids: 30 wt%) to produce a coating liquid (addition type silicone resin composition).

(Example 10)

A pervaporation membrane of Example 10 was obtained in the same manner as in Example 9, except that the type of filler was changed as shown in Table 2.

(Example 11)

A pervaporation membrane of Example 11 was obtained in the same manner as in Example 1, except that 1.15 g of a silica filler (AEROSIL R 972 manufactured by Nippon Aerosil Co., Ltd.), 31.6 g of toluene (manufactured by FUJIFILM Wako Pure Chemical Corporation; special grade) as a dilute solvent, and 0.5 g of a platinum-based catalyst (CAT-PL-50T manufactured by Shin-Etsu Chemical Co., Ltd.) as a curing catalyst were added to 50 g of a silicone resin composition (KS-847T manufactured by Shin-Etsu Chemical Co., Ltd.; toluene solution; solids: 30 wt%) to produce a coating liquid (addition type silicone resin composition).

[Free volume of silicone resin]

The free volume of the silicone resin included in each of the pervaporation membranes of Examples 1 to 3 and 8 to 11 was determined by the following method. First, a layer having the same composition and the same thickness as those of the separation functional layer included in each pervaporation membrane is formed on a release liner. A release-treated polyethylene terephthalate (PET) film (MRE38 manufactured by Mitsubishi Chemical Corporation) was used as the release liner. The above layer was formed on a release-treated surface of the release liner. Then, the release liner was removed to produce a free-standing membrane of the separation functional layer.

Next, a positron source was sandwiched between two free-standing membranes produced as described above, and a positron lifetime spectrum of the free-standing membrane was measured. In this measurement, a sealed radioactive source of $^{22}$Na was used as the positron source, and a fast response photomultiplier tube (BaF$_2$ scintillator) was used as a detector. The number of counts was approximately 6 M counts, and the measurement time was 24 hours (i.e., approximately 70 counts/second). Then, an ortho-positronium lifetime which is correlated with the free volume of the silicone resin was analyzed using the resulting positron lifetime spectrum. Software (PALSfit 3.171) was used for the analysis. Subsequently, the above lifetime value was converted into a free volume pore diameter (assuming that the free volume is spherical, the free volume pore diameter is the diameter of the sphere) using the Tao-Eldrup equation, and the free volume was calculated.

While the separation functional layer of Example 8 is composed only of the silicone resin, the separation functional layers of Examples 1 to 3 and 9 to 11 are each composed of the silicone resin and the silica filler. Therefore, for Examples 1 to 3 and 9 to 11, a sum of the free volume of the silicone resin and the free volume of the silica filler is obtained by the above measurement method. Therefore, for each of Examples 1 to 3 and 9 to 11, the above measurement method was performed also for the silica filler itself to determine the free volume of the silica filler. The free volume of the silicone resin was determined on the basis of the obtained result and a content (vol%) of the silica filler in the separation functional layer. The content (vol%) of the silica filler in the separation functional layer can be calculated from a content (wt%) of the silica filler and a density (g/cm$^3$) of the silica filler.

[Surface area D1 of filler per weight of matrix]

For each of the pervaporation membranes of Examples 1 to 7 and 9 to 11, a BET specific surface area D2 (m$^2$/g) determined for the filler by nitrogen gas absorption, a weight W1 (g) of the matrix (silicone resin) included in the separation functional layer, and a weight W2 (g) of the filler included in the separation functional layer were determined, and a surface area D1 (m$^2$/g) of the filler per weight of the matrix was calculated by the above calculation equation.

[HSP value of filler]

For each of the fillers used in Examples 1 to 7 and 9 to 11, the HSP value was determined by the above method. HSPiP was used for the analysis of the HSP values. Table 1 shows the measurement results for the dispersibility of the filler in each solvent.

[Table 1]

|  | RX50 | RY50 | RX200 | RY200 | R972 |
|---|---|---|---|---|---|
| Acetone | × | × | ○ | ○ | × |
| Methanol | × | × | × | ○ | × |

(continued)

|  | RX50 | RY50 | RX200 | RY200 | R972 |
|---|---|---|---|---|---|
| Ethanol | × | × | ○ | × | × |
| Butanol | ○ | ○ | × | × | ○ |
| Acetonitrile | × | × | × | × | × |
| Dimethyl sulfoxide | × | × | ○ | × | ○ |
| Dipropylene glycol | ○ | ○ | ○ | ○ | ○ |
| γ-Butyrolactone | × | × | ○ | ○ | ○ |
| N-methyl-2-pyrrolidone | ○ | ○ | ○ | ○ | ○ |
| Tetrahydrofuran | ○ | ○ | ○ | ○ | × |
| Aniline | × | × | × | × | × |
| Acetic acid | × | × | ○ | × | × |
| Benzyl alcohol | × | × | × | × | × |
| Ethylene glycol | × | × | × | × | × |
| Glycerin | × | × | × | × | × |
| 1-Methylimidazole | ○ | × | ○ | × | ○ |
| N-methylformamide | × | × | ○ | ○ | ○ |
| Pyridine | ○ | × | × | × | ○ |
| Salicylaldehyde | × | × | × | × | × |
| 2-Aminoethanol | × | × | × | × | ○ |
| ○: No insoluble matter ×: With insoluble matter | | | | | |

[pH of dispersion of filler]

Dispersions of the filler used in Examples 1 to 7 and 9 to 11 were produced by the above method, and the pH of each dispersion was measured.

[PV performance]

For each of the pervaporation membranes of Examples 1 to 11, the separation factor α for n-butanol (BuOH) with respect to water was measured by the following method. First, the pervaporation membrane was cut to a diameter of 74 mm to give a test piece being a flat membrane. The test piece was set in a batch-type membrane separation device (cell). A liquid mixture consisting of n-butanol (BuOH) and water was supplied to a feed space of the cell. The content of BuOH in the liquid mixture was 1.0 wt%.

Next, the cell was immersed in a water bath, and the temperature of the liquid mixture was adjusted at 30°C. Then, the pressure in the permeation space was reduced to 15 hPa while the liquid mixture was being stirred using a stirrer in the cell. Consequently, the liquid mixture permeated through the pervaporation membrane, and a gaseous permeated fluid was obtained. Using a liquid nitrogen cold trap, the gaseous permeated fluid was cooled to be condensed. The composition of the liquid permeated fluid was analyzed by gas chromatography, and the separation factor α was calculated from the analysis result.

[Adhesion]

For each of the pervaporation membranes of Examples 1 to 3 and 8 to 11, the peeling strength A was measured by the above method. As a tensile tester was used Autograph AGS-50NX manufactured by Shimadzu Corporation.

[Table 2]

| | Matrix | | | Filler | | | | | | | |
|---|---|---|---|---|---|---|---|---|---|---|---|
| | Silicone resin composition | Curing reaction | Free volume [nm$^3$] | Type | Micropore | Surface modifying group | Content [wt%] | Surface area D1 [m$^2$/g] | HSP value [MPa$^{1/2}$] | pH of dispersion | Average primary particle diameter [nm] |
| Ex. 1 | KS847T | Addition | 0.329 | RX50 | Without | TMS | 35 | 27 | 23.4 | 6 | 40 |
| Ex. 2 | KS847T | Addition | 0.336 | RY50 | Without | PDMS | 35 | 27 | 22.6 | 6 | 40 |
| Ex. 3 | KS847T | Addition | 0.269 | RX50 | Without | TMS | 50 | 50 | 23.4 | 6 | 40 |
| Ex. 4 | YSR3022 | Condensation | - | RX50 | Without | TMS | 35 | 27 | 23.4 | 6 | 40 |
| Ex. 5 | YSR3022 | Condensation | - | RY50 | Without | PDMS | 35 | 27 | 22.6 | 6 | 40 |
| Ex. 6 | YSR3022 | Condensation | - | RX50 | Without | TMS | 50 | 50 | 23.4 | 6 | 40 |
| Ex. 7 | YSR3022 | Condensation | - | RY50 | Without | PDMS | 50 | 50 | 22.6 | 6 | 40 |
| Ex. 8 | KS847T | Addition | 0.258 | - | - | - | - | - | - | - | - |
| Ex. 9 | KS847T | Addition | 0.341 | RX200 | Without | TMS | 20 | 50 | 23.7 | 6 | 12 |
| Ex. 10 | KS847T | Addition | 0.344 | RY200 | Without | PDMS | 20 | 50 | 24.8 | 6 | 12 |
| Ex. 11 | KS847T | Addition | 0.339 | R972 | Without | DMS | 7 | 10 | 25.8 | 6 | 16 |

EP 4 596 092 A1

16

[Table 2] Continued

| | PV performance | Adhesion |
|---|---|---|
| | Separation factor $\alpha$ | Peeling strength A [N/20 mm] |
| Ex. 1 | 39.6 | 0.39 |
| Ex. 2 | 40.8 | 0.18 |
| Ex. 3 | 32.2 | 0.61 |
| Ex. 4 | 40.6 | - |
| Ex. 5 | 31.7 | - |
| Ex. 6 | 39.5 | - |
| Ex. 7 | 38.9 | - |
| Ex. 8 | 20.2 | 0.12 |
| Ex. 9 | 36.4 | 0.24 |
| Ex. 10 | 38.5 | 0.18 |
| Ex. 11 | 30.3 | 0.18 |

See below for the abbreviations in Tables 1 and 2.

KS847T: Silicone resin composition (KS-847T manufactured by Shin-Etsu Chemical Co., Ltd.)
YSR3022: Silicone resin composition (YSR3022 manufactured by Momentive Performance Materials Japan LLC.)
RX50: Silica filler (AEROSIL RX 50 manufactured by Nippon Aerosil Co., Ltd.; surface modifying group: trimethylsilyl (TMS) group)
RY50: Silica filler (AEROSIL RY 50 manufactured by Nippon Aerosil Co., Ltd.; surface modifying group: dimethylpolysiloxane (PDMS) group)
RX200: Silica filler (AEROSIL RX 200 manufactured by Nippon Aerosil Co., Ltd.; surface modifying group: trimethylsilyl (TMS) group)
RY200: Silica filler (AEROSIL RY 200 manufactured by Nippon Aerosil Co., Ltd.; surface modifying group: dimethylpolysiloxane (PDMS) group)
R972: Silica filler (AEROSIL R 972 manufactured by Nippon Aerosil Co., Ltd.; surface modifying group: dimethylsilyl (DMS) group)

As can be understood from Table 2, each of the pervaporation membranes of Examples 1 to 7 and 9 to 11 including the matrix including the silicone resin and the filler including silica had a higher separation factor $\alpha$ of n-butanol with respect to water than that of Example 8. From this result, it can be said that the pervaporation membranes of Examples 1 to 7 and 9 to 11 are suitable for separating a volatile organic compound from an aqueous solution containing the organic compound. Additionally, according to the results for Examples 1 to 3 and 8 to 11, the addition of the filler including silica increased the free volume of the silicone resin. Furthermore, according to the results for Examples 1 to 3 and 8 to 11, the addition of the filler improved the adhesion between the separation functional layer and the porous support.

INDUSTRIAL APPLICABILITY

The pervaporation membrane of the present embodiment is suitable for separating a volatile organic compound from an aqueous solution containing the organic compound.

**Claims**

1. A pervaporation membrane comprising a separation functional layer, wherein
the separation functional layer includes: a matrix including a silicone resin; and a filler dispersed in the matrix and including silica.

2. The pervaporation membrane according to claim 1, wherein a Hansen solubility parameter of the filler is 20 MPa$^{1/2}$ to 27 MPa$^{1/2}$.

3. The pervaporation membrane according to claim 1, wherein the filler has a surface modified with a modifying group including a hydrocarbon group.

4. The pervaporation membrane according to claim 3, wherein the modifying group includes at least one selected from the group consisting of an organosilyl group and a polyorganosiloxane group.

5. The pervaporation membrane according to claim 1, wherein pH measured by a test below for a dispersion of the filler is 4.0 to 9.0.
   Test: Water, methanol, and the filler are mixed to prepare a dispersion, and pH of the dispersion is measured. A content of the filler in the dispersion is 4 wt%, a weight ratio between water and methanol in the dispersion is 1:1, and the dispersion has a temperature of 25°C.

6. The pervaporation membrane according to claim 1, wherein an average particle diameter of the filler is 1 μm or less.

7. The pervaporation membrane according to claim 1, wherein a content of the filler in the separation functional layer is less than 70 wt%.

8. The pervaporation membrane according to claim 1, wherein the silicone resin is formed from an addition type silicone resin composition, a condensation type silicone resin composition, or a UV-curable silicone resin composition.

9. The pervaporation membrane according to claim 1 configured to be used to separate a volatile organic compound from an aqueous solution containing the organic compound.

10. The pervaporation membrane according to claim 9, wherein the organic compound is a fermented product generated by a microorganism.

FIG.1

20

23a  S  23  23b  S2

10

24a  S1  24  22

# FIG.2

**FIG.3**

FIG.4

## INTERNATIONAL SEARCH REPORT

| International application No. |
|---|
| **PCT/JP2023/032766** |

| A. | CLASSIFICATION OF SUBJECT MATTER |
|---|---|

***B01D 61/36***(2006.01)i; ***B01D 65/10***(2006.01)i; ***B01D 71/02***(2006.01)i; ***B01D 71/70***(2006.01)i
FI: B01D61/36; B01D71/70; B01D71/02; B01D65/10

According to International Patent Classification (IPC) or to both national classification and IPC

| B. | FIELDS SEARCHED |
|---|---|

Minimum documentation searched (classification system followed by classification symbols)

B01D53/22; B01D61/00-71/82; C02F1/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 102188914 A (TSINGHUA UNIVERSITY) 21 September 2011 (2011-09-21) | 1, 3-5, 7-10 |
| | claims, paragraphs [0003], [0005], [0010], [0011], examples | |
| Y | claims, paragraphs [0003], [0005], [0010], [0011], examples | 2-4, 6, 10 |
| X | JP 63-116705 A (G F T G FUR TORENTEHINIKU MIT BESCHRANKTER HAFTUNG) 21 May 1988 (1988-05-21) | 1, 5-10 |
| | claims, page 3, upper right column, line 7 to page 5, lower right column, line 6, examples | |
| Y | claims, page 3, upper right column, line 7 to page 5, lower right column, line 6, examples | 2-4, 6, 10 |
| X | JP 58-95524 A (KURARAY KABUSHIKI KAISHA) 07 June 1983 (1983-06-07) | 1, 5-9 |
| | claims, page 2, upper left column, line 12 to page 3, lower left column, line 7, examples | |
| Y | claims, page 2, upper left column, line 12 to page 3, lower left column, line 7, examples | 2-4, 6, 10 |
| X | WO 2021/054368 A1 (NITTO DENKO CORPORATION) 25 March 2021 (2021-03-25) | 1, 5-9 |
| | claims, paragraphs [0031]-[0036] | |
| Y | claims, paragraphs [0031]-[0036] | 2-4, 6, 10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 October 2023** | **21 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/032766**

| C. | DOCUMENTS CONSIDERED TO BE RELEVANT | |
|---|---|---|
| Category* | Citation of document, with indication, where appropriate, of the relevant passages | Relevant to claim No. |
| Y | WO 2021/124011 A1 (3M INNOVATIVE PROPERTIES COMPANY) 24 June 2021 (2021-06-24) claims, paragraphs [001], [0042] | 2 |

Form PCT/ISA/210 (second sheet) (January 2015)

## INTERNATIONAL SEARCH REPORT
### Information on patent family members

International application No.

**PCT/JP2023/032766**

| Patent document cited in search report | | | Publication date (day/month/year) | Patent family member(s) | | | Publication date (day/month/year) |
|---|---|---|---|---|---|---|---|
| CN | 102188914 | A | 21 September 2011 | (Family: none) | | | |
| JP | 63-116705 | A | 21 May 1988 | US | 4925562 | A | |
| | | | | claims, column 1, line 52 to column 5, line 65, examples | | | |
| | | | | EP | 254758 | A1 | |
| JP | 58-95524 | A | 07 June 1983 | (Family: none) | | | |
| WO | 2021/054368 | A1 | 25 March 2021 | JP | 2021-49518 | A | |
| | | | | EP | 4032602 | A1 | |
| | | | | claims, paragraphs [0032]-[0036] | | | |
| | | | | US | 2022/0401884 | A1 | |
| WO | 2021/124011 | A1 | 24 June 2021 | JP | 2023-506890 | A | |
| | | | | EP | 4076710 | A1 | |
| | | | | CN | 114828991 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4899122 B

**Non-patent literature cited in the description**

- Hansen Solubility Parameters. A Users Handbook. CRC Press, 2007